# EUROPEAN PATENT SPECIFICATION

(11) **EP 2 950 125 B1**
(45) Date of publication and mention of the grant of the patent: **23.10.2019**
(21) Application number: 15166684.9
(22) Date of filing: 07.05.2015
(51) Int. Cl.: G02B 6/44, H02G 3/06

(54) **TORSION RESISTANT CABLE GLAND**
VERWINDUNGSSTEIFE KABELDURCHFÜHRUNG
MANCHON DE CÂBLE RÉSISTANT À LA TORSION

(30) Priority: 29.05.2014 IT MI20140998
(43) Date of publication of application: 02.12.2015
(73) Proprietor: Prysmian S.p.A., 20126 Milano (IT)
(72) Inventor: KERRY, MATT, 20126 Milan (IT)
(74) Representative: Perani & Partners S.p.A.

(56) References cited:
- EP-A2- 0 886 156
- WO-A1-01/59501
- US-B1- 6 269 214
- US-B1- 6 533 472

## Description

### FIELD OF THE INVENTION

The present invention relates to the field of equipment and components for the insertion of optical cables in optical network closures, e.g. into an optical joint closure, optical network terminal or other optical junction box. In particular, the present invention relates to a torsion resistant cable gland comprising a separate cable anti torsion element for reducing torsion of an optical cable.

### BACKGROUND OF THE INVENTION

Optical network closures are housing devices able to house optical components such as the splices connecting the optical fibers of one or more optical cables to respective ones of the optical fibers of another optical cable or of optical cables for final users. Optical network closures are used to protect optical splices from dirt, humidity etc. and also from stresses.

Typically, optical cables enter into optical network closures through cable glands, which are intended to provide a safe mechanical connection of the cable to the optical network closure and to guarantee that torsion effects applied to the cable are not transmitted to the optical fibers inside the optical network closure.

US 5 745 633, discloses an optical cable assembly for providing a sealed junction within an input port of a splice closure. It comprises a plug encasing a portion of a fiber optic cable and an annular grommet mounted around the fiber optic cable so that when a nut is screwed around the plug, the grommet is squeezed reducing torsion to the optical cable.

WO 2011 005371 discloses a cable sealing member comprises an housing including an opening and a clamping nut for applying a compression force to the second end of the housing. The clamping nut includes a retaining clamp to securely hold a telecommunication cable and two halves designed to bite into the sheath of the telecommunication cable to further securely grip the telecommunications cable when it is installed in the inlet device.

US 6 269 214 B1, WO 01/59501 A1 and EP 0 886 156 A2 disclose cable glands of the prior art.

### SUMMARY OF THE INVENTION

The Applicant observes that the solution proposed in US 5 745 633 offers a limited resistance to torsional forces applied to a cable, the result of which can damage the optical fibers contained in the optical network closure. On the other hand, in the solution proposed in WO 2011 005371, when a torsional force is applied to the cable in an anti-clockwise direction, it can have the impact of unscrewing the clamping nut and reducing the effectiveness of the cable seal.

In view of the above, the Applicant has tackled the problem of providing a cable gland with anti-torsion capability, providing enhanced torsional resistance and usable with different cables, regardless to the cable size, reducing installation times and saving moulding costs.

The Applicant has found that it is convenient to have a cable gland having an end equipped with different cable anti torsion elements that can be attached thereto, depending on the type of the cable which passes through the cable gland.

Therefore, the present invention relates to a torsion resistant cable gland partially insertable in a base of an optical joint closure. The torsion resistant cable gland comprises a central body longitudinally extended along a longitudinal direction between a first end and a second end and configured to receive an optical cable passing through said ends, wherein when the central body is partially inserted in the optical joint closure, the first end is positioned inside the inner volume of the optical joint closure and the second end is positioned outside the optical joint closure for receiving a clamping nut. The torsion resistant cable gland also comprises a cable anti torsion element attachable to the second end of the central body and cooperating with the clamping nut so that when the clamping nut is screwed on the second end of the central body, the cable anti torsion element substantially prevents the cable from rotating with respect to the central body. The second end of the central body can be fitted at least partially into the first end of the cable anti torsion element.

Preferably, the cable anti torsion element comprises an outwardly tapered end and a plurality of spaced apart flexible fingers at its opposite end, said flexible fingers being adapted to be squeezed together against the cable surface for securing said torsion resistant cable gland on said optical cable.

Preferably, the flexible fingers of the cable anti torsion element are squeezed together against the cable surface by means of a lockable band, more preferably a jubilee clip.

Advantageously, the second end of the central body comprises a plurality of spaced apart flexible fingers and the surface of the tapered end of the cable anti torsion element has a plurality of radially extended teeth, the teeth being designed to engage with the flexible fingers of the central body for avoiding rotation of the cable anti torsion element with respect to the central body.

Preferably, the cable gland comprises a clamping nut securing the cable anti torsion element and with the second end of the central body. More preferably the clamping nut engages with the cable anti torsion element and is screwed on a tread of the second end of the central body.

Preferably, the cable gland comprises an internal sealing member squeezable from the clamping nut when the latter is screwed on the second end of the central body.

According to an embodiment, the cable gland also comprises a cable securing assembly with a second clamping nut attached to the first end of the central body and a cable retention group cooperating with the second clamping nut in order to retain and secure the optical cable on the cable gland.

Preferably, the cable retention group projects from the second clamping nut along the longitudinal direction, the cable retention group being completely positioned inside the inner volume of the optical joint closure.

Preferably, the cable retention group ends with a securing portion configured to retain and secure the optical cable, the securing portion being extended along an orthogonal direction with respect to the longitudinal direction.

### BRIEF DESCRIPTION OF THE DRAWINGS

The present invention will now be described in more detail hereinafter with reference to the accompanying drawings, in which some examples of the invention are shown.
FIG. 1 is an exploded view of a cable gland according to a first example of the present invention,
FIG. 2 is a side view of the cable gland of FIG. 1 in an assembled configuration,
FIG. 3 is a side view of the cable gland of FIG. 1 in an assembled configuration when inserted in an optical joint closure,
FIG. 4a and 4b are perspective views of the anti torsion element of the cable gland according to the present invention,
FIG. 5 is a side view of a cable gland according to a second example of the present invention,
FIG. 6 is a side view of the cable gland of FIG. 5 in an assembled configuration when inserted in an optical joint closure,
FIG. 7 is an exploded view of a cable gland according to a third example of the present invention,
FIG. 8 is a side view of the cable gland of FIG. 7 in an assembled configuration when inserted in an optical joint closure,
FIG. 9 is an exploded view of a cable gland according to a fourth example of the present invention,
FIG. 10 is a side view of the cable gland of FIG. 9 in an assembled configuration when inserted in an optical joint closure.

### DETAILED DESCRIPTION

For the purposes of the present description and claims an optical cable is deemed to be an optical cable comprising one or more optical fibers, possibly arranged inside one or more buffer tubes, an outer sheath and, optionally, one or more strength members.

An optical fiber is typically constituted by a glass core, a glass cladding and a single or dual coating layer.

The optical fibers may be arranged in various ways in the cable.

In the so-called "central loose tube cables" (briefly, CLT cables), the optical fibers are loosely arranged within a single buffer tube, which is in turn enclosed by the external sheath.

In the so-called "multi loose tube cables" (briefly, MLT cables), the optical fibers are grouped in multiple bundles, the optical fibers of each bundle being loosely arranged within a respective buffer tube. Typically, the buffer tubes may be arranged around a central strength member and stranded according to a closed or open helix (S-Z arrangement).

Further, a so-called "blown fiber tube cables" (briefly, BLT cables), similarly to the MLT cables, comprises a plurality of buffer tubes stranded between them (or arranged around a central strength member) according to a closed or open helix (S-Z arrangement). The buffer tubes are designed to receive single optical fibers (or bundles of optical fibers) blown inside the buffer tubes.

Both in CLT cables and in MTL cables, the external sheath may comprise strength members (typically made of steel or fiber reinforced resin) embedded within the sheath's thickness and placed at diametrically opposed positions. Moreover, or alternatively, the optical fibers or buffer tubes may be surrounded by flexible strength members arranged radially externally of the optical fibers. Flexible strength members may comprise aramid yarns or the like.

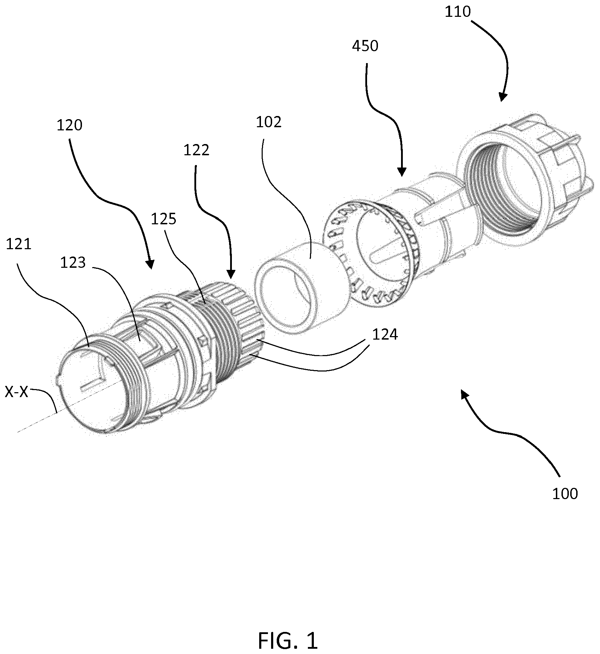

Figure 1 shows a side view of a cable gland 100 for reducing torsion of an optical cable 20 according to a first example of the present invention.

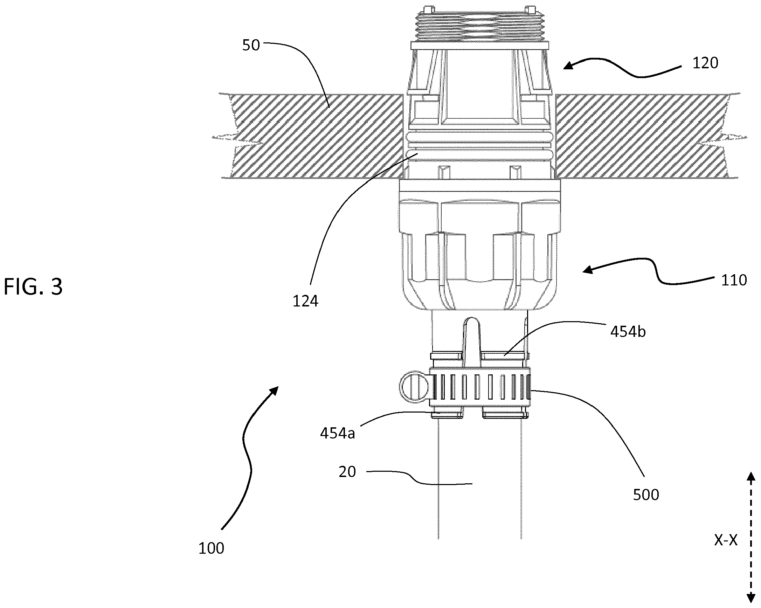

The cable gland 100 can be inserted in a wall 50 of an optical joint closure as shown in figure 3.

For ensuring that the optical cables are secured to the optical joint closure, an optical cable is first inserted and secured into a cable gland, and then the cable gland enters the optical joint closure typically through a port. This enables the operator to make the cable insertion in the gland in a more comfortable position and then attach the gland bearing the cable to the closure.

The cable gland 100 comprises a central body 120 longitudinally extended along a direction X-X between a first end 121 and a second end 122. The cable gland 100 is formed of plastic material by conventional methods, for example by injection moulding.

Preferably, the first end 121 of the central body 120 is externally threaded.

The central body 120 of the cable gland 100 is preferably substantially cylindrical and is configured to receive an optical cable 20 passing through the ends 121,122.

When the central body 120 is partially inserted in the wall 50 of the optical joint closure, the first end 121 is positioned inside the inner volume of the optical joint closure and the second end 122 is positioned outside the optical joint closure.

The central body 120 may include one or more locking elements 123 which protrude from the surface of the body 120. The locking elements 123 disposed on the central body 120 have a deformable cantilever structure which can flex when depressed. After the insertion of the cable gland 100 in the optical joint closure, the locking elements 123 are secured to the wall 50 of the optical joint closure. The cable gland 100 may be removed from the optical joint closure when the cantilever structures are sufficiently depressed so as to disengage from the wall 50.

The locking elements 123 are positioned between the first end 121 and the second end 122. One or two grooves may be located between the locking elements 123 and the second end 122 to receive respective O-rings 124 in order to provide environmental seal between the cable gland 100 and the optical joint closure.

The central body 120 comprises an external threaded portion 125 located between the second end 122 and the locking elements 123. The external threaded portion 125 cooperates with a corresponding internal threaded portion of a first clamping nut 110 in order to radially clamp the optical cable 20 when the first clamping nut 110 is tightened on the cable gland 100. To this end, the second end 122 includes a plurality of spaced apart flexible fingers 127 which can be squeezed together against the cable surface when the first clamping nut 110 is attached to the second end 122 of the central body 120. Further, in some cases, it is possible that the first clamping nut 110 is designed to clamp a standard corrugated pipe where an optical cable 20 is fitted inside it.

An optional internal sealing member 102 may be fitted into the second end 122 to improve the sealing capability of the overall cable gland 100 around the optical cable 20. The internal sealing member 102 is cylindrically and ring-shaped and it is made of rubber so that when the first clamping nut 110 is screwed on the cable gland 100 the internal sealing member is squeezed improving the sealing and the retaining action on the cable 20.

Advantageously, the cable gland 100 comprises a cable anti torsion element 450 attachable to the second end 122 of the central body 120 and cooperating with the clamping nut 110 for reducing torsion of the optical cable 20 when the latter is inserted in the cable gland 100. In particular, the second end 122 of the central body 120 can be fitted at least partially into the first end 451 of the cable anti torsion element 450 as described in detail in the following description.

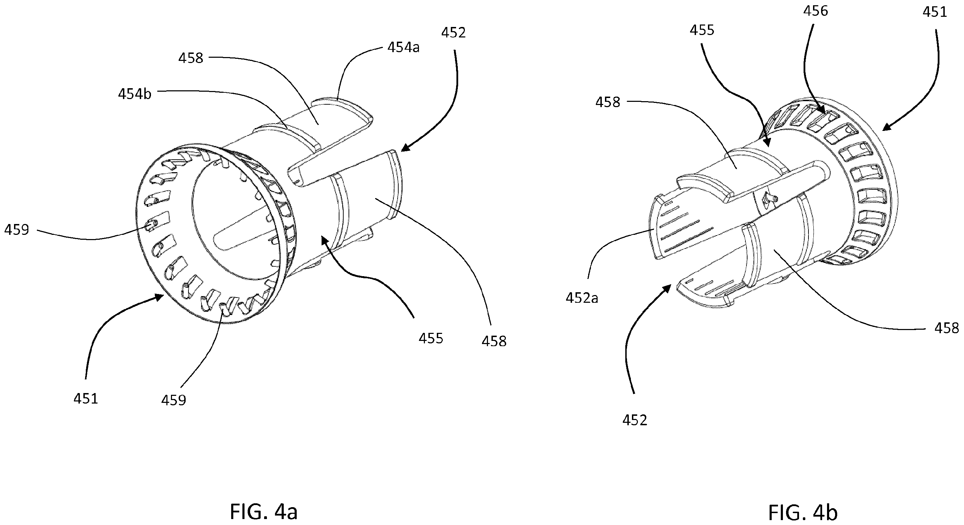

With reference to the example shown on figures 4a,4b, the cable anti torsion element 450 comprises an elongated cylindrical body having a lateral surface 455, diverging at its first end 451, so as forming a conical surface 456 and comprises, at its second opposite end 452a, a plurality of spaced apart flexible fingers 458.

The lateral surface 455 of the cable anti torsion element 450 further comprises a plurality of teeth 459 radially extended from the first end 451 towards the longitudinal axis (not shown) of the cable anti torsion element 450. The teeth 459 are designed to enter between the gaps of the flexible fingers 124 of the central body 120 for avoiding rotation of the cable anti torsion element 450 with respect to the central body 120. To this end, when the clamping nut 110 is screwed on the second threaded end 121 of the cable gland 100, the inner conical surface 111 of the clamping nut 110 (at its free end) matches the conical surface 456 of the cable anti torsion element 450 pushing the latter against the second end 122 of the central body 120 guaranteeing that the teeth 459 enter between the gaps of the flexible fingers 124 of the central body 120 itself avoiding, therefore, rotation of the cable anti torsion element 450 with respect to the central body 120.

Advantageously, the spaced apart flexible fingers 458 can be forced radially inwards together against the cable surface by a lockable band, such as a jubilee clip 500. In this way, the optical cable 20 is secured to the cable gland 100 and torsion of the optical cable 20 is substantially avoided.

With reference to the example shown on figure 3, each flexible finger 458 is externally scored, more preferably, provided with circumferentially arranged grooves 454a,454b in the outer surface thereof for avoiding slipping of the jubilee clip 500. Preferably, the first grooves 454a are arranged substantially at the second end 452 of the cable anti torsion element 450 and the second grooves 454b are arranged substantially at the middle of the flexible fingers 458.

With reference to the example shown on figure 4b, each flexible finger 458 is internally scored, more preferably, provided with longitudinally or helically arranged grooves in an inner surface thereof.

Preferably, the cable anti torsion element 450 comprises four flexible fingers 458 wherein each flexible finger 458 is an elongate rigid member shaped as a section of a cylindrical wall and having a conical, specifically, tapered longitudinal end 452a.

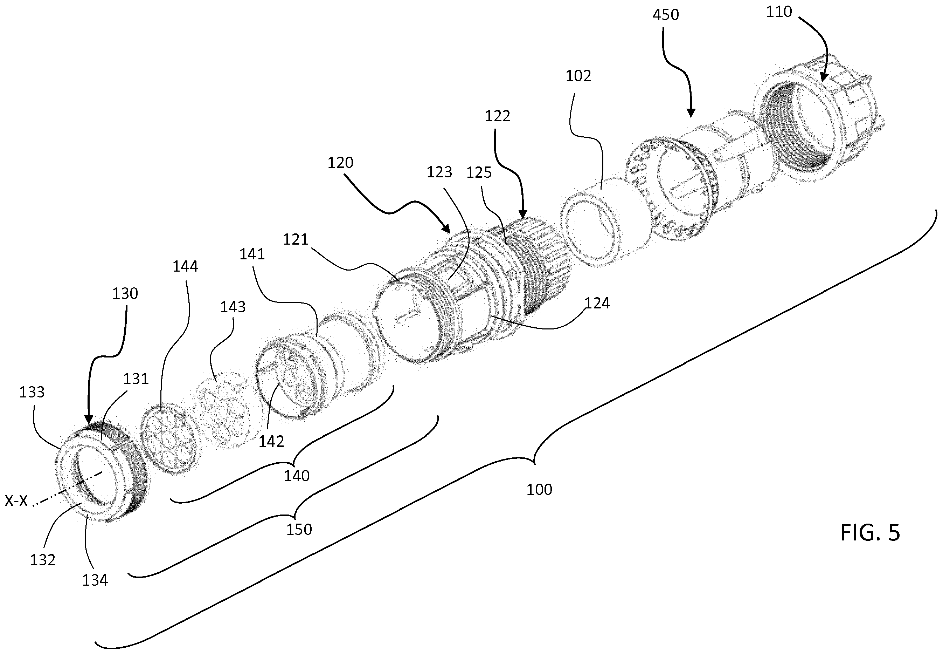

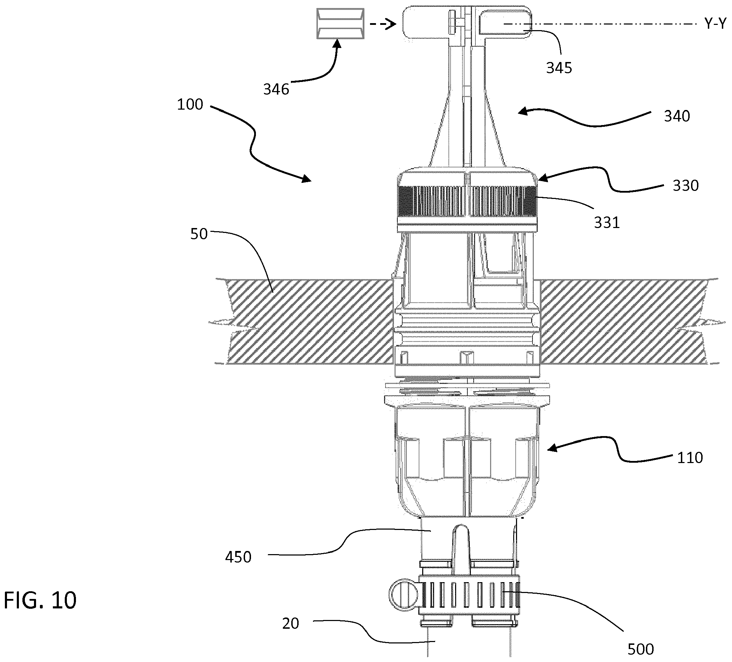

With reference to figures 5-10, it is shown a second, third and fourth example of the present invention where the cable gland 100 comprises, advantageously, a cable securing assembly 150,250,350 attachable to the first end 121 of the cable gland 100 for further retaining and securing the optical cable 20. The cable securing assembly 150,250,350 is interchangeable depending on the type of the cable which passes through the cable gland as it will be described in detail herein after.

In the second example shown on figure 5-6, the cable securing assembly 150 comprises a second clamping nut 130, preferably ring-shaped. The second clamping nut 130 comprises a lateral surface 131 internally threaded which cooperates with the first threaded end 121 of the central body 120. However, for the skilled person will be clear that other types of fastening can be used for fastening the clamping nut 130 to the first end 121 of the cable gland (for example bayonet fittings or the like).

The lateral surface 131 of the second clamping nut 130 extends for a length comprises between 5 mm and 15 mm, preferably 9 mm.

With reference to the example shown in figure 5, the lateral surface 131 of the second clamping nut 130 ends with a tapered lateral surface 132.

The second clamping nut 130 further comprises a first annular surface 133 connected to the tapered lateral surface 132 and which is an extension of the tapered lateral surface 132. The first annular surface 133 is preferably tapered.

Advantageously, the second clamping nut 130 comprises a second annular surface 134 (shown in figure 5) connected to the first annular surface 133 and which is tapered with respect to the extension axis of the second clamping nut 130. The second annular surface 134 is oriented along a substantially opposite direction with respect to the first annular surface 133. The second annular surface 134 extends from the first annular surface 133.

Advantageously, the cable securing assembly 150 comprises a cable retention group 140 cooperating with the second clamping nut 130 for retaining and securing the optical cable as better described here below.

In case the cable gland is used, for example, for a BLT cable, the cable retention group 140 comprises a cylinder 141, an internal sealing member 143 and an internal sealing disk 144 cooperating between them.

In particular, the cylinder 141 comprises a plurality of chambers 142. Each chamber 142 has a circular hole for receiving a buffer tube 22 of the BLT cable 20. In the example shown in figure 5, the chambers 142 may be helix-arranged with six chambers 142 circumferentially arranged and one chamber centrally arranged. However, the cylinder 141 may have different configurations with a different number of chambers 142 in order to receive other types of BLT cables.

Advantageously, the internal sealing member 143 is fitted into the cylinder 141 in order to retain and secure the optical cable 20 on the cable gland 100. In particular, the internal sealing member 143 is preferably cylindrically-shaped and it may be made of rubber. Preferably, the internal sealing member 143 is shaped substantially as the cylinder 141 so that the chambers 142 of the cylinder 141 are axially arranged with the chambers of the internal sealing member 143 when the BLT cable is fitted inside the cable gland 100.

Further, the internal sealing disk 144 is fitted into the cylinder 141 and over the internal sealing member 144. Advantageously, when the second clamping nut 130 is screwed on the first threaded end 121 of the cable gland 100, the edge of the second annular surface 134 pushes the internal sealing disk 144 against the internal sealing member 144 so that the latter is squeezed on the buffer tubes 22 improving the retaining action on the whole cable 20. Moreover, with this solution it is possible to seal the voids between the tubes of the BLT cable and also increase overall pull out resistance.

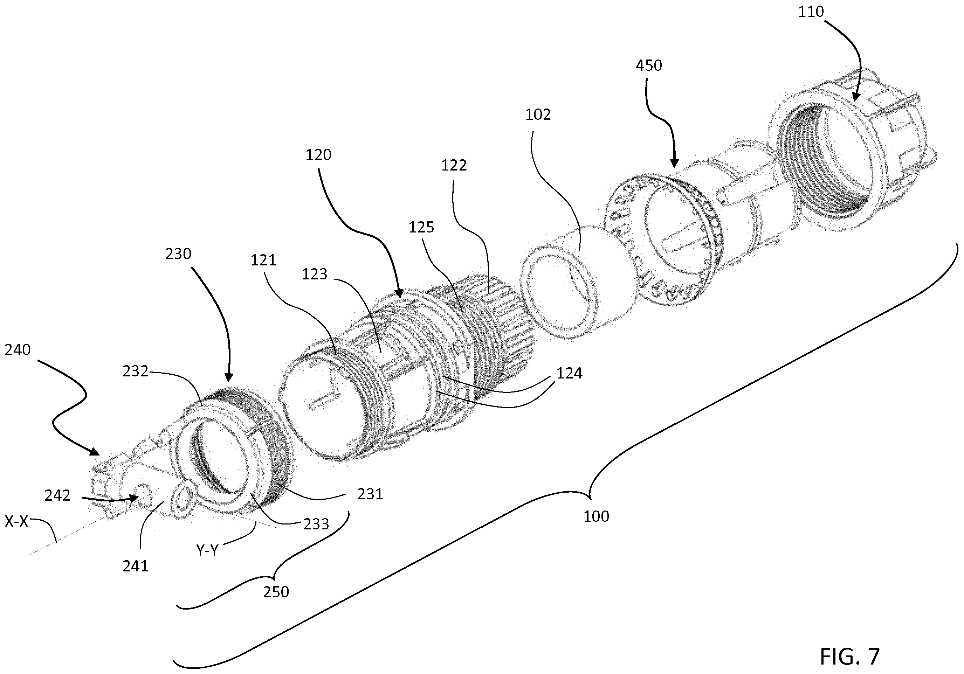

With reference to the third example shown in figure 7-8, the cable gland 100 is configured to receive, preferably, an MLT (or BLT) cable with a central rigid strength member 24.

The cable gland 100 has a cable securing assembly 250 comprising a cable retention group 240 projected from a clamping nut 230 similar to the second clamping nut 130 of the first example.

Preferably, the cable retention group 240 extends along the longitudinal direction X-X from one side of the clamping nut 230. The cable retention group 240 is a partially extension of the lateral surface 231 of the clamping nut 230.

The clamping nut 230 is preferably ring-shaped and comprises a lateral surface 231 internally threaded which cooperates with the first threaded end 121 of the central body 120. Even for this embodiment, other types of fastening can be used for fastening the clamping nut 230 to the first end 121 of the cable gland (for example bayonet fittings or the like).

The lateral surface 231 of the clamping nut 230 extends for a length comprises between 5 mm and 15 mm, preferably 9 mm.

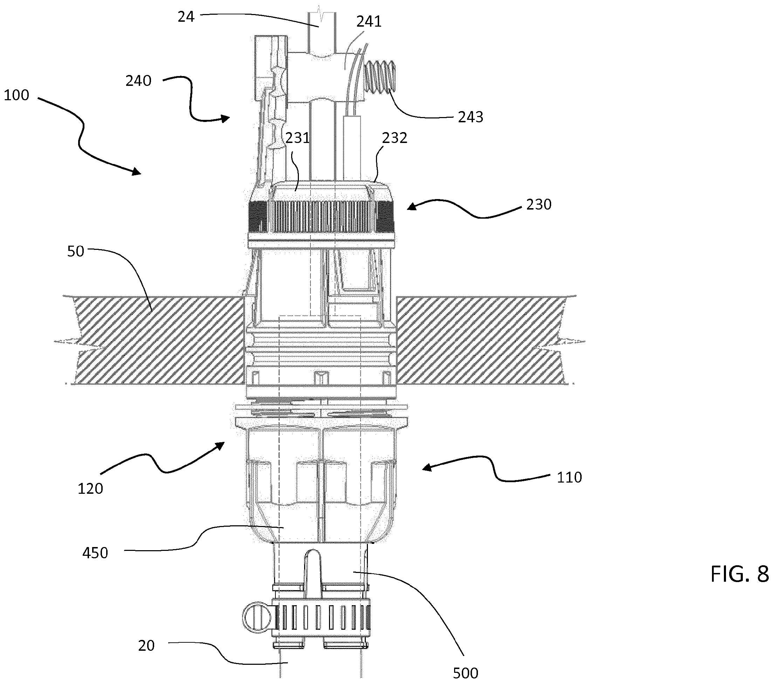

Advantageously, the cable retention group 240 comprises a securing portion 241 having a cylindrical element transversally holed and configured to receive the central strength members 24 (or a central buffer tube) of a MLT optical cable passing through its hole 242. A grab screw 243 (shown in figure 8) may be inserted into the securing portion 241 in order to block from movement the central strength member 24 (or the central buffer tube) improving the retaining action of the overall MLT optical cable. Preferably, the securing portion 241 extends along a direction Y-Y orthogonal with respect to the longitudinal direction X-X. For the skilled person it will be clear that the cable gland of the second example can be used for different cable types without buffer tubes (for example drop/riser cables where the fibers are loosed arranged inside a single or double layer sheath and surrounded by aramid yarns). In this case, the cylindrical element transversally holed is configured to receive the whole drop cable passing through the hole 242.

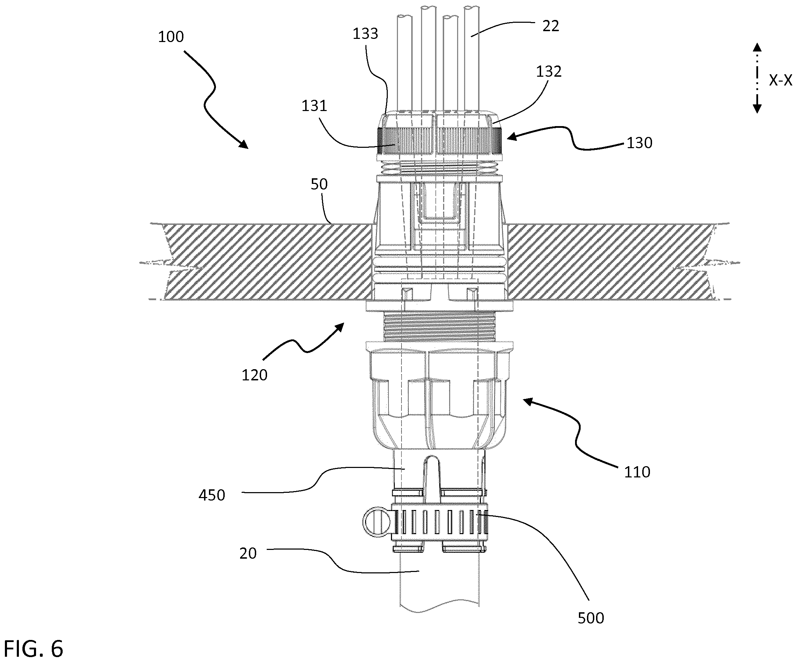

With the solution here described, even when the central body 120 is fitted inside an optical joint closure, it is possible to interchange the cable securing assembly 150 of the first example (shown in figure 5 and 6) with the cable securing assembly 250 of the second example (shown in figure 7 and 8) simplifying installation and saving moulding costs.

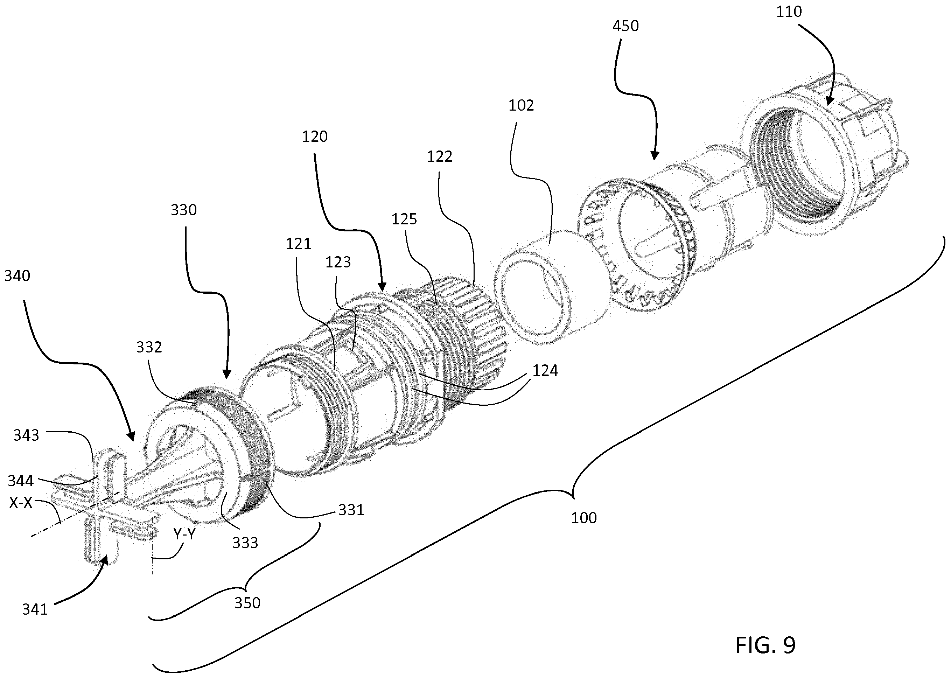

With reference to the fourth examples shown in figure 9-10, the cable gland 100 is configured to receive, preferably, from one to four drop/riser optical cables with aramid yarns between the fiber units.

The cable gland 100 has a cable securing assembly 350 comprising a cable retention group 340 projected from a clamping nut 330 similar to the clamping nut 130 of the first example.

Preferably, the cable retention group 340 extends axially along the longitudinal direction X-X from one side of the clamping nut 330.

The clamping nut 330 is preferably ring-shaped and comprises a lateral surface 331 internally threaded which cooperates with the first threaded end 121 of the central body 120.

The lateral surface 331 of the clamping nut 330 extends for a length comprises between 5 mm and 15 mm, preferably 9 mm.

The cable retention group 340 is attached to the clamping nut 330 through at least two, preferably four, connection bridges 345. The connection bridges 345 are configured to connect the lower base 146 of the cable retention group 340 with the internal edge of the annular surface 333.

Preferably, the clamping nut 330 is made of one-piece. Alternatively, the cable retention group 340 is a separate part which may be coupled with the clamping nut 330. For example, it may be possible to set the length of the connection bridges 345 so that their overall lengths substantially match with the diameter of the annular surface 333. The cable retention group 340 can thus fitted inside the clamping nut 330 by friction.

Advantageously, the cable retention group 340 ends with a securing portion 341 comprising a reel 342 configured to receive at least one turn of the flexible strength members of an optical cable.

Preferably, the securing portion 341 is "X" shaped in order to secure and retain at least four optical cables individually. In particular, the securing portion 341 may comprise two arms crossed between them so that the end of each arm is configured to support a reel 342.

Preferably, each reel 342 is shaped as an elongate mushroom with a stem 344 and an enlarged longitudinally retaining head 345. In the example of figure 5, the stem 344 of each reels 342 extend along the orthogonal direction Y-Y forming the "X" shaped securing portion 341.

According to the example shown in figure 6, a clip 346 configured to cooperate with the reel 342 is provided. Each clip 346 is configured for cooperating with a reel 343. Therefore, in case of two reels 343, there may be provided two clips 346.

Advantageously, the clip 346 is configured to maintain at least one turn of the flexible strength members of an optical cable around the reel 342.

Each of the clips 346 has a "C" cross-section. Preferably, each clip 346 is elongate. Preferably, each clip 346 has a length which is about the length of the reel 343. Each clip 346 is configured to cooperate with a reel 343 by elastically pressing towards the two parallel surfaces of the reel stem 344 for avoiding unrolling of the flexible strength members from the reel stem 344.

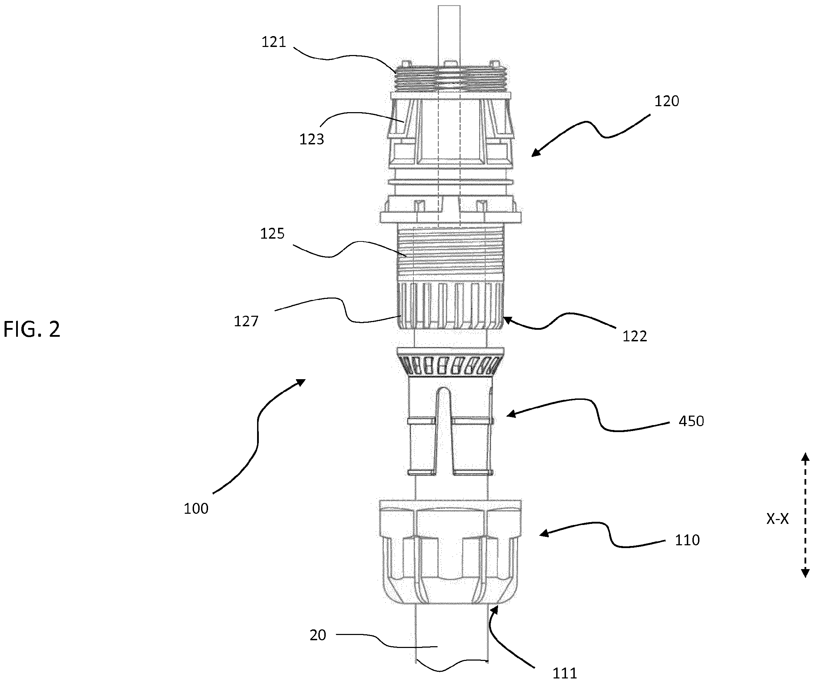

Since, when the central body 120 is fitted inside an optical joint closure, the first threaded end 121 is positioned inside the optical joint closure, it is possible, advantageously, to interchange the cable securing assembly 150 of the second example (shown in figure 1 and 2) with the cable securing assembly 250 of the third example (shown in figure 3 and 4) or with the cable securing assembly 350 of the fourth example (shown in figure 5 and 6). In this way, the central body 120 can be usable with different cable securing assembly 150,250,350 for retaining and securing optical cables regardless to the cable type. Moreover, a user can change the anti torsion element 450 with the central body 120 already fitted in an optical joint reducing installation times.

## Claims

1. A torsion resistant cable gland (100) for reducing torsion of an optical cable (20) partially insertable in a base (50) of an optical joint closure and comprising:
- a central body (120) longitudinally extended along a longitudinal direction (X-X) between a first end (121) and a second end (122) and configured to receive said optical cable (20) passing through said ends (121,122), wherein when said central body (120) is partially inserted in said optical joint closure, said first end (121) is positioned inside the inner volume of said optical joint closure and said second end (122) is configured to be positioned outside said optical joint closure for receiving a clamping nut (110),
- a cable anti torsion element (450) attachable to said second end (122) of said central body (120) and cooperating with said clamping nut (110) so that when said clamping nut (110) is screwed on said second end (122), the cable anti torsion element (450) prevents the cable (20) from rotating with respect to the central body (120), **characterised in that** the second end (122) of the central body (120) is configured to be fitted at least partially into the first end (451) of the cable anti torsion element (450).

2. A torsion resistant cable gland (100) according to claim 1, wherein said cable anti torsion element (450) comprises a lateral surface (455) diverging at its first end (451) and comprises a plurality of spaced apart flexible fingers (458) at its second opposite end (452) which the flexible fingers (458) can be squeezed together against the cable surface by a lockable band (500) for securing and reducing torsion of said optical cable (20) on said cable gland (100).

3. A torsion resistant cable gland (100) according to claim 2, wherein said second end (122) of said central body (120) comprises a plurality of spaced apart flexible fingers (127), said lateral surface (455) having a plurality of teeth (459) radially extended from said first end (451) of said lateral surface (455) and designed to enter between the gaps of said flexible fingers (124) for avoiding rotation of said cable anti torsion element (450) with respect to said central body (120).

4. A torsion resistant cable gland (100) according to claim 2 or 3, comprising a clamping nut (110) able to be fitted on said cable anti torsion element (450) and on the second end (122) of said central body (120).

5. A torsion resistant cable gland (100) according to claim 4, comprising an internal sealing member (102) squeezable from said clamping nut (110) when said clamping nut (110) is screwed on the second end (122) of said central body (120).

6. A torsion resistant cable gland (100) according to any of claims 1-5, comprising a cable securing assembly (150,250,350) with a second clamping nut (130,230,330) attached to said first end (121) of said central body (120) and a cable retention group (140,240,340) cooperating with said second clamping nut (130,230,330) in order to retain and secure said optical cable (20) on said cable gland (100).

7. A torsion resistant cable gland (100) according to claim 6, wherein said cable retention group (140,240,340) projects from said second clamping nut (130,230,330) along a longitudinal direction (X-X), said cable retention group (140,240,340) being completely positioned inside the inner volume of said optical joint closure.

8. A torsion resistant cable gland (100) according to claim 6 or 7, wherein said cable retention group (240,340) ends with a securing portion (241,341) configured to retain and secure said cable (20), said securing portion (241,341) being extended along an orthogonal direction (Y-Y) with respect to said longitudinal direction (X-X).

## Patentansprüche

1. Verwindungssteife Kabeldurchführung (100) zur Verringerung der Torsion eines optischen Kabels (20), die teilweise in ein Basiselement (50) eines optischen Verbindungsverschlusses einführbar ist und aufweist:
- einen zentralen Körper (120), der sich entlang einer Längsrichtung (X-X) zwischen einem ersten Ende (121) und einem zweiten Ende (122) longitudinal erstreckt und ausgebildet ist, das optische Kabel (20), das durch die Enden (121, 122) verläuft, aufzunehmen, wobei, wenn der zentrale Körper (120) teilweise in den optischen Verbindungsverschluss eingeführt ist, das erste Ende (121) in dem Innenvolumen des optischen Verbindungsverschlusses angeordnet ist, und das zweite Ende (122) ausgebildet ist, außerhalb des optischen Verbindungsverschlusses zur Aufnahme einer Klemmmutter (110) angeordnet zu werden,
- ein Kabeltorsionsverhinderungselement (450), das an dem zweiten Ende (122) des zentralen Körpers (120) anbringbar ist und mit der Klemmmutter (110) derart zusammenwirkt, dass, wenn die Klemmmutter (110) auf das zweite Ende (122) geschraubt wird, das Kabeltorsionsverhinderungselement (450) verhindert, dass sich das Kabel (20) in Bezug auf den zentralen Körper (120) dreht,
**dadurch gekennzeichnet, dass**
das zweite Ende (122) des zentralen Körpers (120) ausgebildet ist, zumindest teilweise in das erste Ende (451) des Kabeltorsionsverhinderungselements (450) eingepasst zu werden.

2. Verwindungssteife Kabeldurchführung (100) nach Anspruch 1, wobei das Kabeltorsionsverhinderungselement (450) eine laterale Fläche (455) aufweist, die an ihrem ersten Ende (451) auseinanderläuft, und mehrere beabstandete flexible Finger (458) auf seinem zweiten gegenüberliegenden Ende (452) aufweist, wobei die flexiblen Finger (458) gegen die Kabeloberfläche mittels eines verriegelbaren Bandes (500) zum Befestigen und zum Verringern der Torsion des optischen Kabels (20) auf der Kabeldurchführung (100) zusammengedrückt werden können.

3. Verwindungssteife Kabeldurchführung (100) nach Anspruch 2, wobei das zweite Ende (122) des zentralen Körpers (120) mehrere beabstandete flexible Finger (127) aufweist, wobei die laterale Oberfläche (455) mehrere Zähne (459) hat, die sich radial aus dem ersten Ende (451) der lateralen Oberfläche (455) erstrecken und so gestaltet sind, dass sie in die Spalten zwischen den flexiblen Fingern (124) eindringen, um eine Drehung des Kabeltorsionsverhinderungselements (450) in Bezug auf den zentralen Körper (120) zu vermeiden.

4. Verwindungssteife Kabeldurchführung (100) nach Anspruch 2 oder 3, mit einer Klemmmutter (110), die mit dem Kabeltorsionsverhinderungselement (450) und mit dem zweiten Ende (122) des zentralen Körpers (120) verbindbar ist.

5. Verwindungssteife Kabeldurchführung (100) nach Anspruch 4, mit einem inneren Dichtelement (102), das von der Klemmmutter (110) verformbar ist, wenn die Klemmmutter (110) auf das zweite Ende (122) des zentralen Körpers (120) aufgeschraubt wird.

6. Verwindungssteife Kabeldurchführung (100) nach einem der Ansprüche 1-5, mit einer Kabelsicherungsanordnung (150, 250, 350) mit einer zweiten Klemmmutter (130, 230, 330), die an dem ersten Ende (121) des zentralen Körpers (120) angebracht ist, und mit einer Kabelrückhaltegruppe (140, 240, 340), die mit der zweiten Klemmmutter (130, 230, 330) so zusammenwirkt, dass das optische Kabel (20) auf der Kabeldurchführung (100) gehalten und befestigt wird.

7. Verwindungssteife Kabeldurchführung (100) nach Anspruch 6, wobei die Kabelhaltegruppe (140, 240, 340) aus der zweiten Klemmmutter (130, 230, 330) entlang einer Längsrichtung (X-X) hervorsteht, wobei die Kabelhaltegruppe (140, 240, 340) vollständig in dem Innenvolumen des optischen Verbindungsverschlusses angeordnet ist.

8. Verwindungssteife Kabeldurchführung (100) nach Anspruch 6 oder 7, wobei die Kabelhaltegruppe (240, 340) mit einem Sicherungsbereich (241, 341) endet, der ausgebildet ist, das Kabel (20) zu halten und zu sichern, wobei der Sicherungsbereich (241, 341) sich entlang einer in Bezug auf die Längsrichtung (X-X) senkrechten Richtung (Y-Y) erstreckt.

## Revendications

1. Manchon de câble résistant à la torsion (100) pour réduire la torsion d'un câble optique (20) insérable partiellement dans une base (50) d'une fermeture de jonction optique et comprenant :
- un corps central (120) s'étendant longitudinalement le long d'une direction longitudinale (X-X) entre une première extrémité (121) et une seconde extrémité (122) et configuré pour recevoir ledit câble optique (20) passant à travers lesdites extrémités (121, 122), dans lequel, lorsque ledit corps central (120) est inséré partiellement dans ladite fermeture de jonction optique, ladite première extrémité (121) est positionnée à l'intérieur du volume intérieur de ladite fermeture de jonction optique et ladite seconde extrémité (122) est configurée pour être positionnée à l'extérieur de ladite fermeture de jonction optique pour recevoir un écrou de serrage (110),
- un élément anti-torsion de câble (450) pouvant être attaché à ladite seconde extrémité (122) dudit corps central (120) et coopérant avec ledit écrou de serrage (110) de telle sorte que lorsque ledit écrou de serrage (110) est vissé sur ladite seconde extrémité (122), l'élément anti-torsion de câble (450) empêche le câble (20) de tourner par rapport au corps central (120),
**caractérisé en ce que** la seconde extrémité (122) du corps central (120) est configurée pour être ajustée au moins partiellement dans la première extrémité (451) de l'élément anti-torsion de câble (450).

2. Manchon de câble résistant à la torsion (100) selon la revendication 1, dans lequel ledit élément anti-torsion de câble (450) comprend une surface latérale (455) divergeant au niveau de sa première extrémité (451) et comprend une pluralité de doigts flexibles espacés (458) au niveau de sa seconde extrémité opposée (452), lesquels doigts flexibles (458) peuvent être comprimés ensemble contre la surface du câble par une bande verrouillable (500) pour fixer ledit câble optique (20) et réduire sa torsion sur ledit manchon de câble (100).

3. Manchon de câble résistant à la torsion (100) selon la revendication 2, dans lequel ladite seconde extrémité (122) dudit corps central (120) comprend une pluralité de doigts flexibles espacés (127), ladite surface latérale (455) ayant une pluralité de dents (459) s'étendant radialement à partir de ladite première extrémité (451) de ladite surface latérale (455) et conçues pour pénétrer entre les espaces desdits doigts flexibles (124) pour éviter la rotation dudit élément anti-torsion de câble (450) par rapport audit corps central (120).

4. Manchon de câble résistant à la torsion (100) selon la revendication 2 ou 3, comprenant un écrou de serrage (110) pouvant être placé sur ledit élément anti-torsion de câble (450) et sur la seconde extrémité (122) dudit corps central (120).

5. Manchon de câble résistant à la torsion (100) selon la revendication 4, comprenant un élément d'étanchéité interne (102) pouvant être comprimé par ledit écrou de serrage (110) lorsque ledit écrou de serrage (110) est vissé sur la seconde extrémité (122) dudit corps central (120).

6. Manchon de câble résistant à la torsion (100) selon l'une quelconque des revendications 1 à 5, comprenant un ensemble de fixation de câble (150, 250, 350) avec un second écrou de serrage (130, 230, 330) attaché à ladite première extrémité (121) dudit corps central (120) et un groupe de retenue de câble (140, 240, 340) coopérant avec ledit second écrou de serrage (130, 230, 330) afin de retenir et de fixer ledit câble optique (20) sur ledit manchon de câble (100).

7. Manchon de câble résistant à la torsion (100) selon la revendication 6, dans lequel ledit groupe de retenue de câble (140, 240, 340) fait saillie par rapport audit second écrou de serrage (130, 230, 330) le long d'une direction longitudinale (X-X), ledit groupe de retenue de câble (140, 240, 340) étant complètement positionné à l'intérieur du volume intérieur de ladite fermeture de jonction optique.

8. Manchon de câble résistant à la torsion (100) selon la revendication 6 ou 7, dans lequel ledit groupe de retenue de câble (240, 340) se termine par une partie de fixation (241, 341) configurée pour retenir et fixer ledit câble (20), ladite partie de fixation (241, 341) étant étendue le long d'une direction orthogonale (Y-Y) par rapport à ladite direction longitudinale (X-X).
